# EUROPEAN PATENT APPLICATION

(11) **EP 4 707 627 A1**
(43) Date of publication of application: **11.03.2026**
(21) Application number: 24797231.8
(22) Date of filing: 30.04.2024
(51) Int. Cl.: F16C 43/04, F16C 19/06, F16C 33/41, F16C 33/42, F16C 33/66, F16C 33/78, F16N 11/00

(54) **METHOD FOR MANUFACTURING ROLLING BEARING, ROLLING BEARING, AND ROLLING BEARING MANUFACTURING DEVICE**

(30) Priority: 28.04.2023 JP 2023075184; 09.06.2023 JP 2023095690; 22.03.2024 JP 2024046400
(71) Applicant: Minebea Mitsumi Inc., Kitasaku-gun, Nagano 3890293 (JP)
(72) Inventor: YAZAWA, Eiichi, Kitasaku-gun, Nagano 389-0293 (JP); KOBAYASHI, Keisuke, Kitasaku-gun, Nagano 389-0293 (JP)
(74) Representative: Winter, Brandl - Partnerschaft mbB
(86) International application number: PCT/JP2024/016632
(87) International publication number: WO 2024/225489

(57) **Abstract**

A method for manufacturing a rolling bearing (1), the rolling bearing (1) including a plurality of rolling elements (60) arranged in a circumferential direction, including a first rolling element (60G) and a second rolling element (60A) adjacent in the circumferential direction, a crown-shaped holder (50) including a plurality of claw parts (59, 53) including a first claw part (59G) projecting in a first direction in an axial direction of a bearing and supporting the first rolling element (60G) from one side in the circumferential direction and a second claw part (53A) supporting the second rolling element (60A) from an other side in the circumferential direction, and an inner ring (40) and an outer ring (30) including a raceway groove (46, 36) in contact with the rolling elements (60), the method for manufacturing includes a step of arranging a lump of grease (70) so as not to come into contact with, in the axial direction of the bearing, a surface (52a) at the first direction side of the crown-shaped holder (50) positioned between the first claw part (59G) supporting the first rolling element (60G) and the second claw part (53A) supporting the second rolling element (60A) in the circumferential direction of the bearing, and so as to be supported by the first rolling element (60G) and the first claw part (59G), and the second rolling element (60A) and the second claw part (53A), and a step of attaching a seal member (10) to the outer ring (30) or the inner ring (40) in an aspect of adhering to the lump of grease (70), and bringing a part of the lump of grease (70) into contact with the surface (52a) at the first direction side of the crown-shaped holder (50).

## Description

### Technical Field

The present invention relates to a method for manufacturing a rolling bearing, a rolling bearing, and a rolling bearing manufacturing device.

### Background Art

In a rolling bearing including a rolling element, sealing of a bearing space with grease as a lubricant is known. While grease contributes to lubrication of the rolling element, the grease also causes a rise in rotational torque by being entrapped between the rolling element and a raceway groove of a raceway ring.

There is a known technique including, for example, in order to keep grease away from the raceway groove, an outer ring of a rolling bearing including a recess part, the recess part including a placement surface for placing the grease, and a first inclined part formed between the placement surface and the ridge part, the first inclined part approaching an outer peripheral surface of the outer ring toward an outer side in an axial direction.

### Citation List

### Patent Literature

Patent Document 1: JP 7209902 B
Patent Document 2: JP 6637787 B
Patent Document 3: JP 2002-139050 A
Patent Document 4: JP 2013-50139 A

### Summary of Invention

### Technical Problem

However, depending on the diameter of the rolling element and the width of the raceway ring of the rolling bearing, the technique cannot suppress entrapment of the grease in some cases.

In one aspect, an object is to provide a method for manufacturing a rolling bearing, a rolling bearing, and a rolling bearing manufacturing device capable of suppressing the entrapment of grease.

### Solution to Problem

In one aspect, a method for manufacturing a rolling bearing includes a plurality of rolling elements arranged in a circumferential direction, the rolling elements including a first rolling element and a second rolling element adjacent in the circumferential direction, a crown-shaped holder including a plurality of claw parts including a first claw part projecting in a first direction in an axial direction of a bearing and supporting the first rolling element from one side in the circumferential direction and a second claw part supporting the second rolling element from an other side in the circumferential direction, and an inner ring and an outer ring including a raceway groove in contact with the rolling elements, the method for manufacturing including: arranging a lump of grease so as not to come into contact with, in the axial direction of the bearing, a surface at the first direction side of the crown-shaped holder positioned between the first claw part supporting the first rolling element and the second claw part supporting the second rolling element in the circumferential direction of the bearing, and so as to be supported by the first rolling element and the first claw part, and the second rolling element and the second claw part; and attaching a seal member to the outer ring or the inner ring in an aspect of adhering to the lump of grease, and bringing a part of the lump of grease into contact with the surface at the first direction side of the crown-shaped holder.

According to one aspect, the entrapment of grease can be suppressed.

### Brief Description of Drawings

Fig. 1 is a side view at a negative direction side in an axial direction of a rolling bearing before being attached with grease and a seal member in a first embodiment.
Fig. 2 is a cross-sectional view illustrating an example of a rolling bearing in the first embodiment.
Fig. 3 is an enlarged cross-sectional view illustrating an example of a bearing space in the first embodiment.
Fig. 4 is an exploded perspective view of the rolling bearing in the first embodiment.
Fig. 5 is an inner view at a negative direction side in the axial direction of a rolling bearing after a break-in operation in the background art.
Fig. 6 is a side view at a positive direction side in the axial direction of the rolling bearing before being attached with the seal member in the first embodiment.
Fig. 7A is a cross-sectional view along a circumferential direction illustrating an example of arrangement of grease after attachment of the seal member in the first embodiment.
Fig. 7B is a cross-sectional view along the circumferential direction illustrating another example of the arrangement of grease after attachment of the seal member in the first embodiment.
Fig. 8 is an inner view at the negative direction side in the axial direction of the rolling bearing after a break-in operation in the first embodiment.
Fig. 9 is a top view illustrating an example of a first seal member having grease adhering after a break-in operation in the background art.
Fig. 10 is a top view illustrating an example of a first seal member with grease adhering after the break-in operation in the first embodiment.
Fig. 11 is a cross-sectional view along the circumferential direction illustrating an example of distribution of grease after a break-in operation in the background art.
Fig. 12 is a cross-sectional view along the circumferential direction illustrating an example of distribution of grease after a break-in operation in the first embodiment.
Fig. 13 is a top view illustrating an example of a manufacturing step in the first embodiment.
Fig. 14 is a cross-sectional view illustrating an example of a manufacturing step in the first embodiment.
Fig. 15A is a cross-sectional view along the circumferential direction illustrating an example of a manufacturing step in the first embodiment.
Fig. 15B is a cross-sectional view along the circumferential direction illustrating an example of a crown-shaped holder after application of grease in the first embodiment.
Fig. 16 is a perspective view illustrating an example of a wave-shaped holder in a second embodiment.
Fig. 17 is a cross-sectional view along the circumferential direction illustrating an example of arrangement of grease in the second embodiment.
Fig. 18 is a cross-sectional view along the circumferential direction illustrating an example of arrangement of grease in a third embodiment.
Fig. 19 is a cross-sectional view along the circumferential direction illustrating an example of arrangement of grease in a comparative example.
Fig. 20 is a perspective view illustrating an example of a crown-shaped holder in a second modification.
Fig. 21 is a partial perspective view illustrating an example of a crown-shaped holder in a third modification.
Fig. 22 is a partial perspective view illustrating an example of a crown-shaped holder in a fourth modification.
Fig. 23 is a partial perspective view illustrating an example of a crown-shaped holder in a fifth modification.
Fig. 24 is a cross-sectional view illustrating an example of a positional relationship between grease and a raceway groove in a sixth modification.
Fig. 25 is a cross-sectional view illustrating an example of a positional relationship between grease and a raceway groove in a comparative example.

### Description of Embodiments

Hereinafter, each embodiment of a method for manufacturing a rolling bearing, a rolling bearing, and a rolling bearing manufacturing device disclosed in the present application will be described in detail with reference to the drawings. Note that the dimensional relationship between elements and the scale of each element in the drawings may differ from reality. The drawings may include parts with dimensional relationships and scales different from each other between drawings. In each drawing, for easy understanding of the description, a coordinate system may be illustrated with a side attached with a first seal member 10 described later being a positive direction side in an axial direction and a side attached with a second seal member 20 being a negative direction in the axial direction. A rolling bearing before a lump of grease 70 described below is placed and before the seal members 10 and 20 are attached may be expressed as a rolling bearing 3, and a rolling bearing after the lump of grease 70 is placed and before the seal members 10 and 20 are attached may be a rolling bearing 2.

### First Embodiment

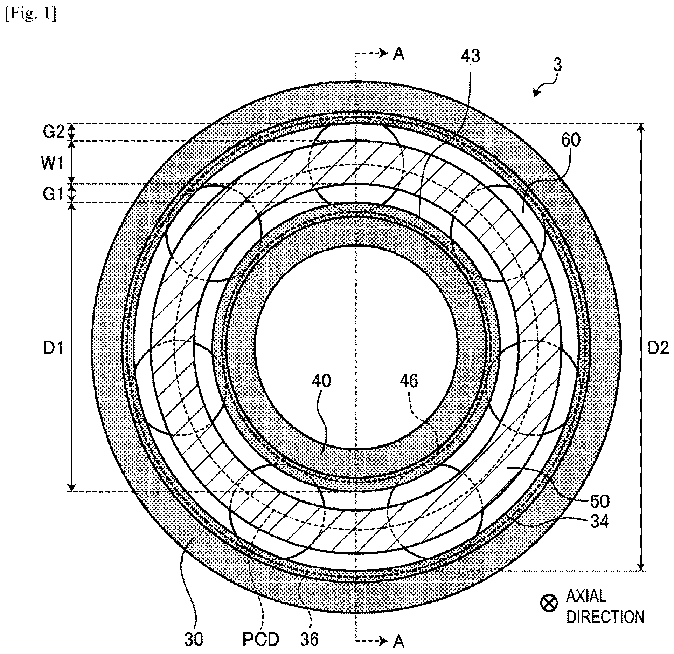

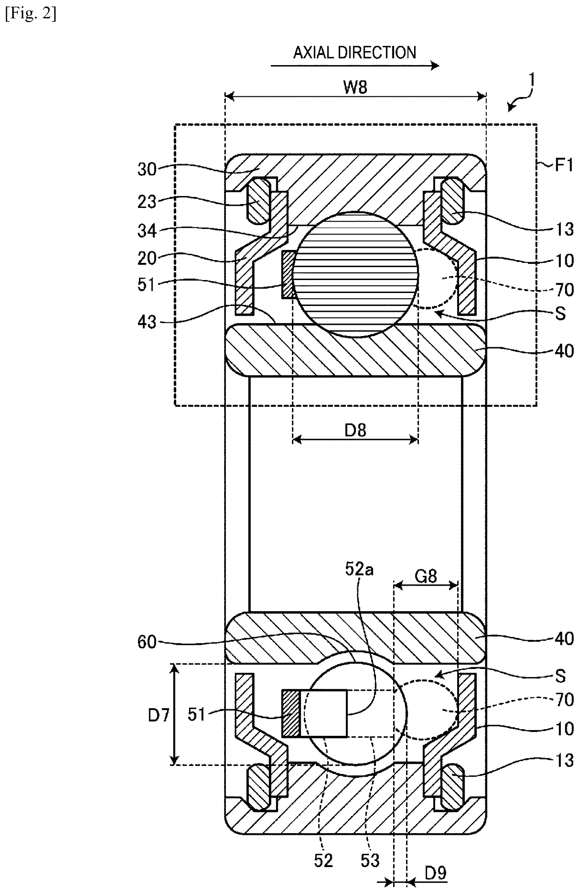

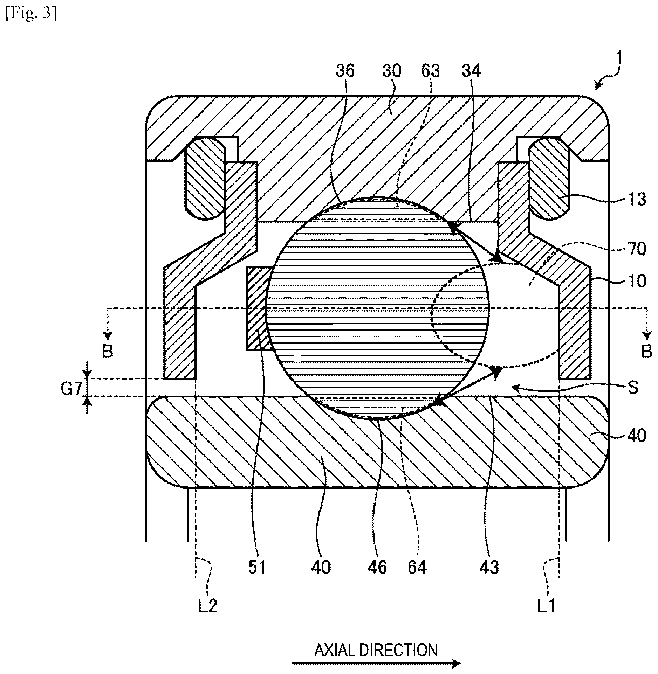

A rolling bearing 1 in the first embodiment is manufactured, for example, by placing the lump of grease 70 as illustrated in Figs. 2 and 3 at the rolling bearing 3 illustrated in Fig. 1, and further attaching the seal members 10 and 20. Fig. 1 is a side view at a negative direction side in an axial direction of a rolling bearing before being attached with grease and a seal member in a first embodiment. Fig. 2 is a cross-sectional view illustrating an example of a rolling bearing in the first embodiment. Fig. 3 is an enlarged cross-sectional view illustrating an example of a bearing space in the first embodiment. Fig. 2 illustrates a cross section taken along line A-A in Fig. 1. Fig. 3 is an enlarged view of a part indicated by a frame F1 of Fig. 2.

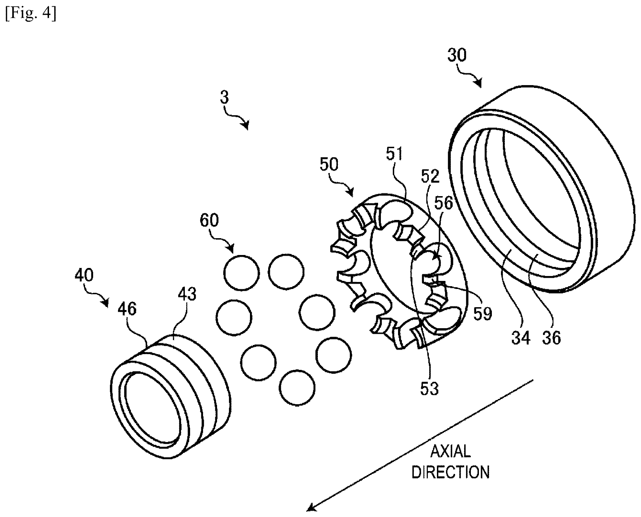

As illustrated in Fig. 4, the rolling bearing 3 illustrated in Fig. 1 includes an outer ring 30, an inner ring 40, a holder 50, and a plurality of rolling elements 60. Fig. 4 is an exploded perspective view of the rolling bearing in the first embodiment. As illustrated in Figs. 1 and 4, the rolling bearing 3 in the first embodiment includes seven rolling elements 60.

The rolling elements 60 are balls made of a metal material such as a steel material, for example, or a ceramic material. The plurality of rolling elements 60 are held at, for example, the holder 50 side by side in a circumferential direction.

The holder 50 is a crown-shaped holder made of resin as illustrated in Fig. 4, for example, and includes an annular part 51 and a column part 52. In the first embodiment, the annular part 51 is arranged at the negative direction side in the axial direction. The column part 52 extends from the annular part 51 at the positive direction side in the axial direction. Claw parts 53 and 59 projecting at the positive direction side in the axial direction are formed at the column part 52. The rolling elements 60 are held by a holding part 56 formed by the annular part 51 of the holder 50 and the claw parts 53 and 59 of the column part 52.

The outer ring 30 and the inner ring 40 are made of a metal material such as a steel material. In the outer ring 30, a raceway groove 36 is formed opposing the inner ring 40 so as to extend in a circumferential direction on an inner peripheral surface 34. In the inner ring 40, a raceway groove 46 is formed opposing the outer ring 30 so as to extend in a circumferential direction on an outer peripheral surface 43.

The seal members 10 and 20 are plate materials having a substantially annular shape made of a galvanized steel plate, a stainless steel plate, an elastic material reinforced by a core metal, resin, or the like. Note that when expressed distinctly from each other, the seal member 10 and the seal member 20 may be represented as a first seal member 10 and a second seal member 20.

As illustrated in Fig. 2, the first seal member 10 is fixed at the positive direction side in the axial direction of the inner peripheral surface 34 of the outer ring 30 via a snap ring 13. Similarly, the second seal member 20 is fixed at the negative direction side in the axial direction of the inner peripheral surface 34 of the outer ring 30 via a snap ring 23. In this case, the first seal member 10 opposes the claw parts 53 and 59 of the holder 50 in the axial direction, and the second seal member 20 opposes the annular part 51 of the holder 50 in the axial direction. Note that the seal members 10 and 20 may be fixed to the outer ring 30 without using the snap rings 13 and 23.

The first seal member 10 and the second seal member 20 have inner peripheral parts extending to an immediate vicinity of the inner ring 40. By this, the first seal member 10 and the second seal member 20 cover between the outer ring 30 and the inner ring 40, and protect the rolling element 60 and the lump of grease 70. As illustrated in Fig. 3, a region surrounded by the outer ring 30 and the inner ring 40, the first seal member 10 and the second seal member 20, and imaginary lines L1 and L2 extending from each of the seal members 10 and 20 toward an inner side in the radial direction up to the outer peripheral surface 43 constitutes a bearing space S.

In a rolling bearing, a base oil component exudes from grease, contributing to lubrication. On the other hand, for example, entrapment of a main body of grease between a rolling element and a raceway groove causes a rise in rolling torque. When grease is placed at the inner peripheral surface of an outer ring of the rolling bearing, entrapment of the grease to the raceway groove is suppressed by placing the grease so as to be apart from the raceway groove, for example, in contact with a seal member.

On the other hand, for example, as illustrated in Fig. 2, in a case where the proportion of a ball diameter D8 of the rolling element 60 to a width W8 of the outer ring 30 is large, for example, in a case where the proportion of the ball diameter D8 to the width W8 illustrated in Fig. 2 is, for example, 42% or more, 45% or more, 50% or more, or the like, it is difficult to secure the distance between the grease and the raceway groove when the grease is arranged at the inner peripheral surface 34 of the outer ring 30. At a time point when the grease is arranged, there is a possibility that part of the grease enters between the rolling element 60 and the raceway groove. When the seal members 10 and 20 are attached, due to the grease being pushed inside the bearing space, there is a possibility that part of the grease enters between the rolling element 60 and the raceway groove 36 or 46. In this case, the grease is preferably arranged at not the outer ring 30 but the holder 50.

In particular, also in a case where the outer diameter of the outer ring 30 is, for example, 70 mm or less, it is difficult to secure the distance between the grease and the raceway groove when the grease is arranged at the inner peripheral surface 34 of the outer ring 30. Also in this case, the grease is preferably arranged at not the outer ring 30 but the holder 50. In this case, the outer diameter of the outer ring 30 may be, for example, 50 mm or less, or 22 mm or less.

However, the grease placed at the holder is fluid, and in some cases, the shape collapses due to rotation of the rolling bearing by a break-in operation or the like. In this case, due to a grease bridge being formed between the holder and the outer ring or the inner ring, the grease is easily entrapped in the raceway groove. Then, as illustrated in Fig. 1, the rolling bearing 3 is formed so as to sufficiently secure the distance between the holder 50 and the outer ring 30 and the inner ring 40 in order to suppress generation of the grease bridge.

For example, as illustrated in Fig. 1, a width W1 in a radial direction of the holder 50 in the first embodiment is preferably 45% or less, or 42% or less, of the ball diameter D8 of the rolling element 60 illustrated in Fig. 2. The width W1 of the holder 50 is preferably less than 53% of a distance D7 (G1 + W1 + G2 illustrated in Fig. 1) in a bearing radial direction between, for example, the outer peripheral surface 43 of the inner ring 40 and the inner peripheral surface 34 of the outer ring 30.

In the rolling bearing of a rolling element guide type with motion in the radial direction of the holder 50 being restricted by the rolling elements 60, an outer diameter D1 of the outer peripheral surface 43 of the inner ring 40 is preferably formed such that a gap G1 between the outer peripheral surface 43 and the inner peripheral surface of the holder 50 in the radial direction is 20% or more, for example, 25% or more, of the distance between the inner peripheral surface 34 of the outer ring 30 and the outer peripheral surface 43 of the inner ring 40. Similarly, an inner diameter D2 of the inner peripheral surface 34 of the outer ring 30 is preferably formed such that a gap G2 between the inner peripheral surface 34 and the outer peripheral surface of the holder 50 in the radial direction is 15% or more, for example, 23% or more, of the distance between the inner peripheral surface 34 of the outer ring 30 and the outer peripheral surface 43 of the inner ring 40. On the other hand, in the rolling bearing not of a rolling element guide type, the total value of gaps between the holder 50 and the outer ring 30 and the inner ring 40 is preferably 35% or more of the distance between the inner peripheral surface of the outer ring 30 and the outer peripheral surface of the inner ring 40.

In this manner, by setting the width W1 or the like of the holder 50 in order to suppress generation of the grease bridge, a torque reduction effect of about 5% can be obtained. Note that the torque reduction effect described below is calculated based on the torque value after the rolling bearing sealed with grease is rotated at 1500 rpm for 2 minutes.

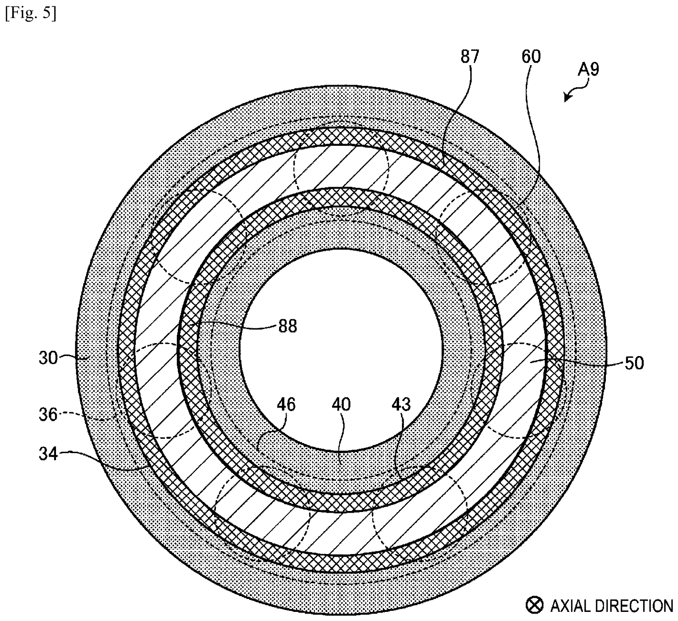

Also in this case, when the volume of grease sealed so as to be arranged on the holder is large (e.g., in the volume of the bearing space S, the proportion of the lump of grease 70 is 15% or more), the placed lump of grease protrudes from the holder in the radial direction, and thus easily approaches the outer ring or the inner ring. In this case, as illustrated in Fig. 5, the grease bridge is likely to be generated after a break-in operation. Fig. 5 is an inner view at a negative direction side in the axial direction of the rolling bearing after the break-in operation in the background art. Note that the background art illustrated in Fig. 5 illustrates a case where grease is sealed so as to be arranged on a surface 52a of the column part 52 of the holder 50.

As illustrated in Fig. 5, in the background art, grease bridges 87 and 88 are formed between the outer ring 30 and the inner ring 40 and the holder 50 over the entire circumferential direction of a rolling bearing A9. The larger the volume of grease is, the more easily the grease bridge is formed. Note that the rolling bearing A9 illustrated in Fig. 5 illustrates a state with the seal member removed from the rolling bearing after the break-in operation in the background art.

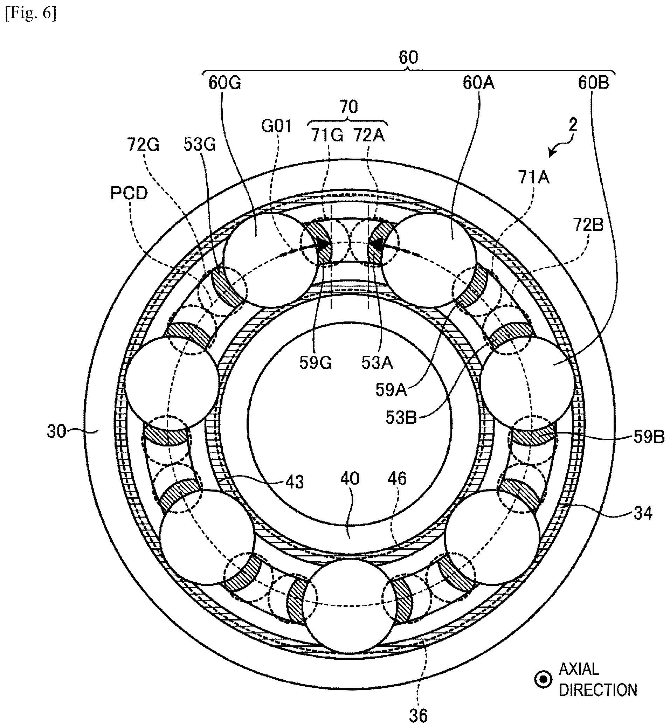

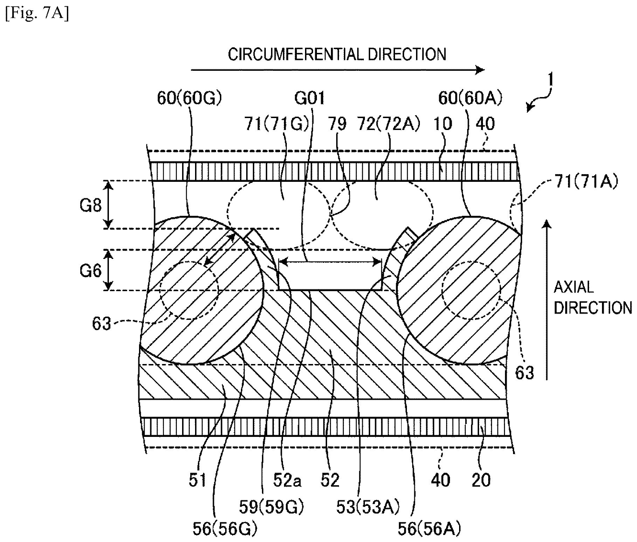

Then, the method for manufacturing a rolling bearing according to the first embodiment includes a step of arranging the lump of grease 70 at the positive direction side in the axial direction in the bearing space S illustrated in Figs. 2 and 3 so as to be supported by two rolling elements 60 or a part of the holder 50 adjacent in the circumferential direction. More specifically, as illustrated in Figs. 6 and 7A, the lump of grease 70 is placed so as to be supported by the rolling elements 60 and the claw parts 53 and 59 of the holder 50. Fig. 6 is a side view at the positive direction side in the axial direction of the rolling bearing before being attached with the seal member in the first embodiment. Fig. 7A is a cross-sectional view along a circumferential direction illustrating an example of arrangement of grease after attachment of the seal member in the first embodiment. Fig. 7A illustrates a cross section along the circumferential direction taken along line B-B in Fig. 3. Note that hereinafter, when expressed distinctly from one another, the seven rolling elements 60 may be represented as rolling elements 60A to 60G, respectively. The same applies to the holding part 56, the claw parts 53 and 59, and the first lump 71 and the second lump 72 of the lump of grease 70 described below.

A distance G01 between a holding part 56G including a claw part 59G and a holding part 56A including a claw part 53A, the holding part 56G and the holding part 56A being adjacent to each other in the circumferential direction, in the first embodiment is equal to or less than the diameter D8 of the rolling element 60 illustrated in Fig. 2. As illustrated in Fig. 7A, the rolling element 60G is held by the holding part 56G including the claw part 59G, and the rolling element 60A is held by the holding part 56A including the claw part 53A. Note that the distance G01 is not a linear distance but a curved distance along a pitch circle diameter PCD of the rolling element 60 illustrated in Fig. 1. Note that the rolling element 60G is an example of the first rolling element, and the claw part 53A and the claw part 53G are examples of the second claw part. The rolling element 60A is an example of the second rolling element, and the claw part 59A and the claw part 59G are examples of the first claw part.

In the first embodiment, the pitch circle having the lump of grease 70 arranged substantially matches the pitch circle having the rolling elements 60 arranged. Specifically, the lump of grease is arranged such that the pitch circle passing through the centers of a plurality of the lumps of grease 70 substantially matches the pitch circle passing through the centers of the plurality of rolling elements 60. In this case, the pitch circle diameter PCD of the lump of grease 70 substantially matches the pitch circle diameter PCD of the rolling element 60.

As illustrated in Figs. 2 and 7A, a distance G8 between the claw parts 53 and 59 and the first seal member 10 in the axial direction is less than 50%, preferably less than 45%, of the ball diameter D8 of the rolling element 60, for example. As illustrated in Fig. 2, a distance D9 in an axial direction of a part having the rolling element 60 being exposed from the holder 50 is less than 20%, preferably less than 17%, of the ball diameter D8 of the rolling element 60, for example.

The proportion of the ball diameter D8 of the rolling element 60 to the width W8 of the outer ring illustrated in Fig. 2 can be, for example, 42% or more, preferably 45% or more, and more preferably 50% or more. The proportion of the lump of grease 70 in the bearing space volume (volume of the entire volume of the bearing space S with the volumes of the plurality of rolling elements 60 and the holder 50 subtracted) can be, for example, 10% or more and 30% or less, 15% or more and 20% or less, 15% or more and 35% or less, or 25% or more and 35% or less, and can also be 25% or more and 60% or less, 40% or more and 50% or less, 40% or more and 60% or less, 50% or more and 60% or less, or the like.

The lump of grease 70 in the first embodiment includes the first lump 71 and the second lump 72. For example, the lump of grease 70 illustrated in Fig. 7A includes a first lump 71G supported by the rolling element 60G and the claw part 59G in the first embodiment, and a second lump 72A supported by the other rolling element 60A and the other claw part 53A. That is, the lump of grease 70 is sealed so as to span between two points of the holding part 56G including the claw part 53G and the holding part 56A including the claw part 53A. In this case, the first lump 71G and the second lump 72A of the lump of grease 70 come into contact with each other at a contact point 79. As illustrated in Figs. 6 and 7A, the second lump 72A held by the claw part 53A and the rolling element 60A is arranged so as not to come into contact with the first lump 71A held by the claw part 59G holding the rolling element 60A from the other side in the circumferential direction and the rolling element 60A. That is, the first lump 71A and the second lump 72A are arranged so as to be apart in the circumferential direction with the rolling element 60A in between. Similarly, the first lump 71G and the second lump 72G are arranged so as to be apart in the circumferential direction with the rolling element 60G in between.

In such a configuration, the lump of grease 70 is sealed so as to be caught by the claw parts 53 and 59 of the holder 50. Both the first lump 71 and the second lump 72 of the lump of grease 70 do not come in contact with the surface 52a at the positive direction side in the axial direction of the column part 52 at the time of sealing. Specifically, in the step of arranging the lump of grease 70, as illustrated in Fig. 7A, a gap G6 is formed between the lump of grease 70 and the surface 52a of the column part 52 in the axial direction of the bearing. In this case, the distance between the lump of grease 70 and the raceway grooves 36 and 46 is secured as indicated by arrows in Fig. 3 at the sealed stage. That is, in the first embodiment, the lump of grease 70 is arranged so as to be apart from the outer ring 30 and the inner ring 40 in the bearing radial direction in the bearing space surrounded by the inner ring 40 and the outer ring 30 and the first seal member 10 so as not to adhere to the raceway grooves 36 and 46. At this time, the lump of grease 70 may be arranged at a position as far as possible from the raceway grooves 36 and 46 in the axial direction without preventing a part of the lump of grease 70 from coming into contact with the outer ring 30 and the inner ring 40.

In such a configuration, the lump of grease 70 is arranged not at the outer ring side or the inner ring side in the radial direction or at the negative direction side in the axial direction, that is, the direction approaching the raceway grooves 36 and 46, but at the side approaching the first seal member 10, that is, the positive direction side in the axial direction.

In this case, as indicated by arrows in Figs. 3 and 7A, a distance is easily secured between the placed lump of grease 70 and a part 63 of the rolling element 60 overlapping the raceway groove 36 of the outer ring 30. The same applies to a distance between the lump of grease 70 indicated by the arrow in Fig. 3 and a part 64 of the rolling element 60 overlapping the raceway groove 46 of the inner ring 40. This suppresses the amount of grease entrapped in the raceway groove 36 or 46 with rotation of the rolling element 60.

As illustrated in Fig. 7A, the method for manufacturing a rolling bearing in the first embodiment includes a step of attaching the first seal member 10 to the outer ring 30 such that the lump of grease 70 adheres. At this time, the lump of grease 70 is pushed and deformed by the first seal member 10 as illustrated in Fig. 7A.

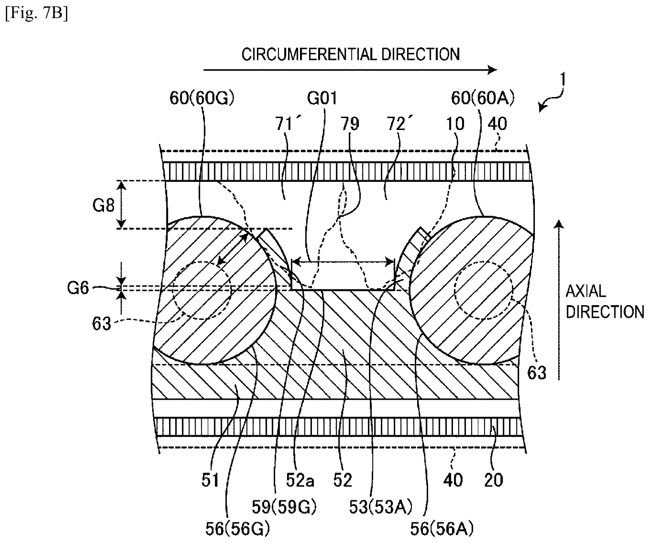

Note that the first lump 71 and the second lump 72 of the lump of grease 70 may be pushed in the axial direction when the first seal member 10 is deformed by being attached, and may be deformed as a first lump 71' and a second lump 72' illustrated in Fig. 7B to adhere to (or come into contact with) the surface 52a of the column part 52 of the holder 50. Fig. 7B is a cross-sectional view along the circumferential direction illustrating another example of the arrangement of grease after attachment of the seal member in the first embodiment. That is, after the first seal member 10 is attached, due to the lump of grease 70 being pushed and deformed, the distance in the axial direction of the gap G6 decreases, and the distance may become "0" depending on the degree of deformation. In other words, after the first seal member 10 is attached, the lump of grease 70 may adhere to (or come into contact with) the surface 52a. In this case, the grease adheres to both the first seal member 10 and the surface 52a of the column part 52 of the holder 50. Note that the surface 52a is an example of a part other than the claw part of the crown-shaped holder. However, also in this case, the amount of grease adhering to the surface 52a of the column part 52 is smaller than the case where a lump of grease is directly applied to the surface 52a as illustrated in Fig. 5. As indicated by arrows in Fig. 7B, the distance between the first lump 71' and the second lump 72' of grease and the raceway groove 36 is also ensured.

The method for manufacturing a rolling bearing in the first embodiment further includes a step of causing the rolling bearing 1 attached with the lump of grease 70 and the seal members 10 and 20 to perform a break-in operation. The break-in operation is a step of rotating at a rotation speed of the maximum allowable rotation speed or less or the use rotation speed or less, for example, 30000 rpm or less, 10000 rpm or less, 5000 rpm or less, 2000 rpm or less, or the like. The break-in operation preferably includes a stage of maintaining for a predetermined time at a rotation speed of 5000 rpm or less. Note that the break-in operation mentioned here also includes an acoustic performance confirmation test by an Anderon meter or the like.

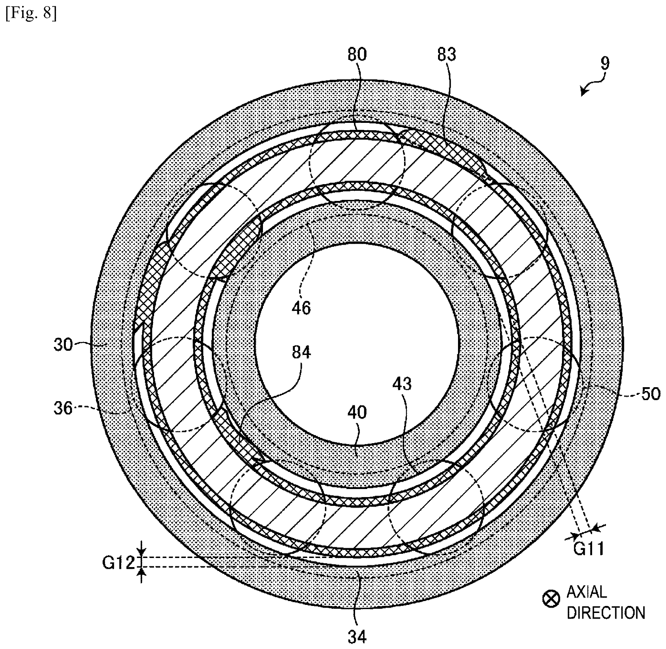

In this case, also in the first embodiment, as illustrated in Fig. 8, grease bridges 83 and 84 are formed at a part in the circumferential direction. Fig. 8 is an inner view at the negative direction side in the axial direction of the rolling bearing after a break-in operation in the first embodiment. A rolling bearing 9 illustrated in Fig. 8 illustrates a state where the seal members 10 and 20 are removed from the rolling bearing 1 after a break-in operation in the first embodiment.

However, movement of the grease due to the break-in operation is also suppressed by the first seal member 10, and thus the amount of the grease stirred with rotation of the rolling bearing 1 is small. As illustrated in Fig. 8, a gap G11 between the inner ring 40 and grease 80 and a gap G12 between the outer ring 30 and the grease 80 are maintained at other parts in the circumferential direction. That is, in the first embodiment, the grease bridge is suppressed from being formed over the entire circumference.

Note that when the rolling bearing rotates, the grease easily moves toward an outer side in the radial direction by the action of the centrifugal force. In this case, the grease bridge 83 formed between the holder 50 and the inner peripheral surface 34 of the outer ring 30 is considered to be larger than the grease bridge 84 formed between the holder 50 and the outer peripheral surface 43 of the inner ring 40.

Also in this case, a gap preferably remains between the grease 80 and the inner peripheral surface 34 of the outer ring 30. For example, in the first embodiment, after a break-in operation, the proportion of the area of the region with the grease visually recognizable to the area of the entire gap (gap over the entire circumference) between the holder 50 and the inner peripheral surface 34 of the outer ring 30 as viewed in the axial direction is 70% or less. The proportion of this area can be confirmed by an optical microscope or the like.

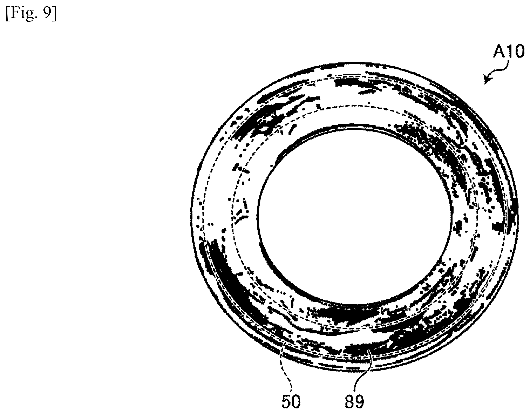

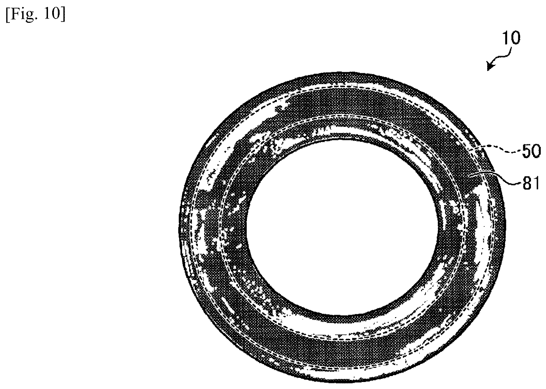

On the other hand, in the first embodiment, a large amount of grease adheres to the first seal member 10. Fig. 9 is a top view illustrating an example of the first seal member having grease adhering after a break-in operation in the background art. Fig. 10 is a top view illustrating an example of the first seal member with grease adhering after the break-in operation in the first embodiment. Note that in Figs. 9 and 10, parts indicated by broken lines indicate parts opposing the holder 50 in the axial direction. Note that the background art illustrated in Fig. 9 illustrates a case where grease is sealed so as to be arranged on a surface 52a of the column part 52 of the holder 50.

In the background art, since the grease is sealed so as to be close to the raceway groove, grease 89 adhering to a first seal member A10 is relatively small as illustrated in Fig. 9. In particular, in the background art, the grease 89 protruding to the outer ring 30 side or the inner ring 40 side is small. On the other hand, in the first embodiment, as illustrated in Fig. 10, a large amount of grease 81 has moved from the lump of grease 70 to the first seal member 10.

In the first embodiment, of the lump of grease 70 sealed in an aspect and supported by the rolling elements 60 and the claw parts 53 and 59 of the holder 50, the amount of the lump of grease 70 approaching the raceway groove 36 or 46 is small also after the break-in operation, and easily stays on the holder 50. For example, when the first seal member 10 and the second seal member are removed after the break-in operation, 20% or more of the volume of the sealed grease adheres onto the holder 50. The grease adhering to the holder 50 is preferably 30% or more of the volume of the sealed grease.

The proportion of the volume of the grease adhering to the holder 50 can be confirmed by measuring the weight of the holder 50 removed from the rolling bearing, for example. In the first embodiment, the total volume of the grease adhering to the holder 50 and the first seal member 10 is 40% or more, preferably 60% or more, and more preferably 70% or more, of the volume of the sealed grease.

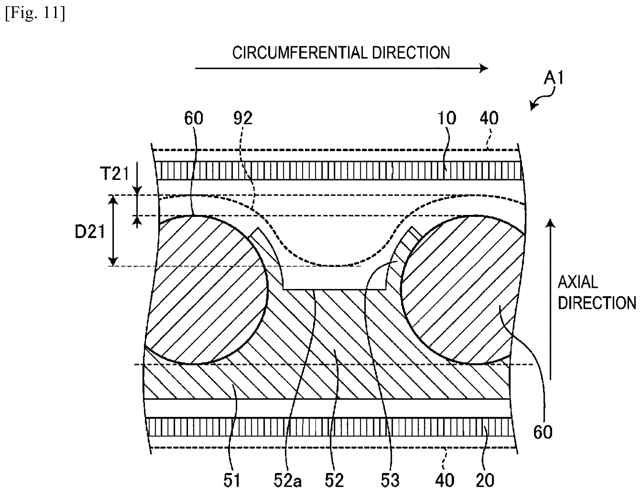

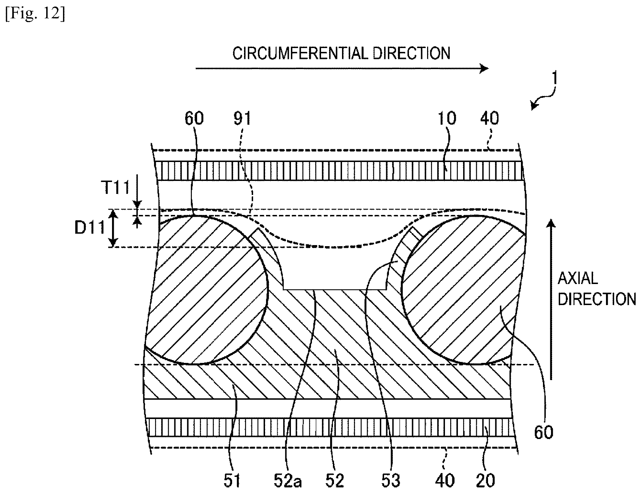

Fig. 11 is a cross-sectional view along the circumferential direction illustrating an example of distribution of grease after a break-in operation in the background art. Fig. 12 is a cross-sectional view along the circumferential direction illustrating an example of distribution of grease after a break-in operation in the first embodiment. Note that, unlike the cases illustrated in Figs. 5 and 9, the background art illustrated in Fig. 11 illustrates a case where grease is sealed at the inner peripheral surface of the outer ring. Figs. 11 and 12 do not illustrate the grease adhering to the first seal member 10.

As illustrated in Fig. 11, in the background art, the lump of grease can be sealed so as to come into contact with the rolling elements 60 when being annularly applied at the inner peripheral surface of an outer ring of a rolling bearing A1 in the background art. In this case, a large amount of grease 92 after a break-in operation remains at an upper surface of the rolling element 60 in the axial direction. That is, a thickness T21 in the axial direction of the grease 92 on the rolling elements 60 is large.

Part of the grease in the background art moves onto the holder after a break-in operation, but the amount of the part of the grease is not large. In this case, a difference D21 between the thickness of the grease 92 on the rolling element 60 and the thickness of the grease 92 in an intermediate part of two adjacent rolling elements 60 also increases.

On the other hand, in the first embodiment, the lump of grease 70 is sealed so as to span the two adjacent rolling elements 60. In this case, the amount of grease 91 moving on the rolling elements 60 is smaller than the amount of the grease in the background art. As illustrated in Fig. 12, the thickness of the grease 91 covering the rolling elements 60 is, for example, 100 µm or less. That is, a thickness T11 in the axial direction of the grease 91 on the rolling elements 60 is smaller than the thickness T21 in the background art.

In this case, the amount of the grease 91 remaining between the two adjacent rolling elements 60 is also large. The amount of the grease 91 between the rolling elements 60 varies depending on the height of a grease pocket and the like, but as illustrated in Fig. 12, the grease 91 reaches a position higher than the middle of the height in the axial direction of the claw parts 53 and 59, for example. That is, a difference D11 between the thickness of the grease 91 on the rolling element 60 and the thickness of the grease 91 at the intermediate part of the two adjacent rolling elements 60 is also smaller than the difference D21 in the background art.

In the grease placed as the lump of grease 70, loss tangent tanδ when measured under a predetermined measurement condition, that is, a temperature of 25°C, a frequency of 1 Hz, and a strain amount of 0.07 (fixed)% is a value of 0.1 or more and 0.2 or less. This easily stabilizes the shape of placed grease, and can more suitably achieve both reduction of rotational torque and maintenance of good lubrication performance over a long period of time.

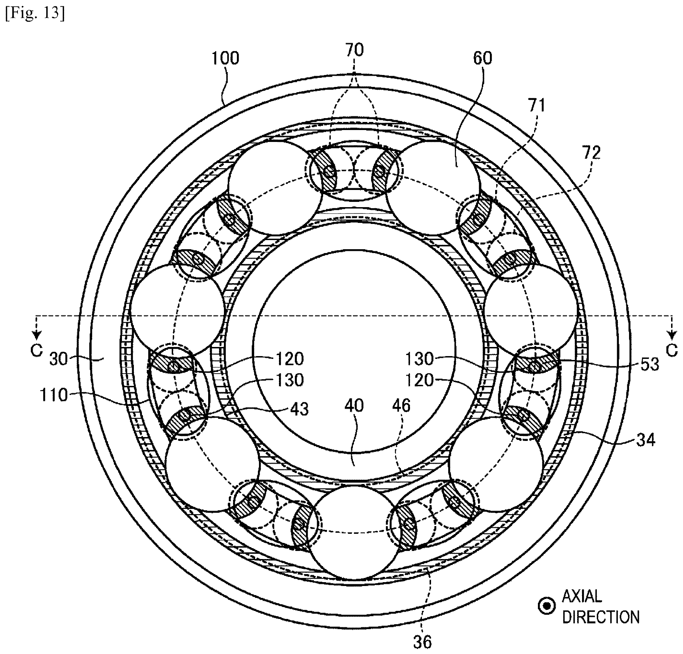

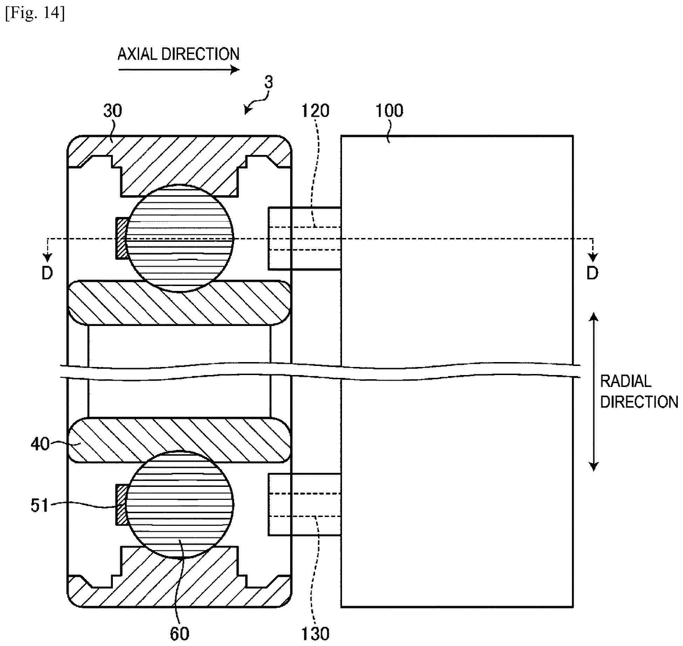

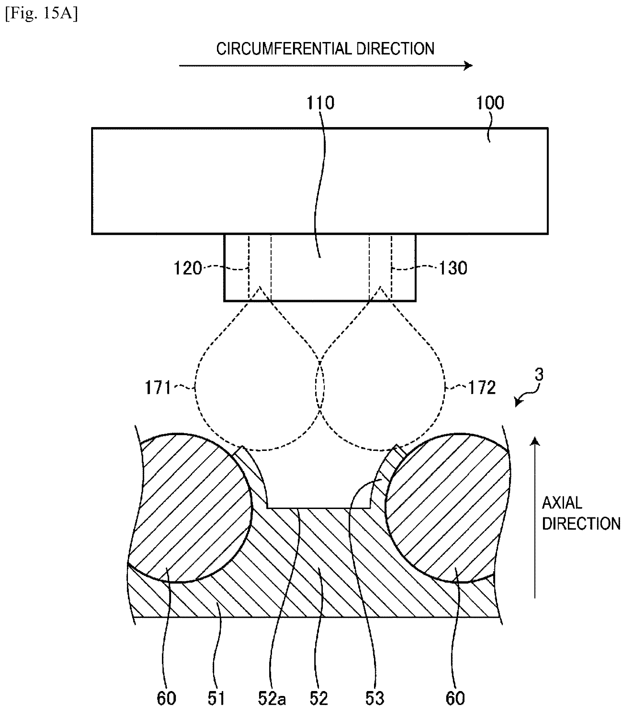

The lump of grease 70 including the two lumps 71 and 72 is placed by a manufacturing device 100 including two nozzles 120 and 130 as illustrated in Figs. 13 to 15A, for example. Fig. 13 is a top view illustrating an example of a manufacturing step in the first embodiment. Fig. 14 is a cross-sectional view illustrating an example of a manufacturing step in the first embodiment. Fig. 15A is a cross-sectional view along the circumferential direction illustrating an example of a manufacturing step in the first embodiment. Fig. 14 illustrates a cross section taken along line C-C in Fig. 13. Fig. 15A illustrates a cross section along the circumferential direction taken along line D-D in Fig. 14.

As illustrated in Figs. 13 to 15A, the manufacturing device 100 in the first embodiment includes a plurality of placement parts 110. As many the placement parts 110 as the number of rolling elements 60 in the rolling bearing 1, for example, are provided.

Each of the placement parts 110 includes the two nozzles 120 and 130. For example, as illustrated in Fig. 13, the nozzle 120 is provided in the vicinity of a position opposing the claw parts 53 and 59 of the holder 50 in the axial direction, and the nozzle 130 is provided in the vicinity of a position corresponding to the other claw parts 53 and 59 of the holder 50 in the axial direction.

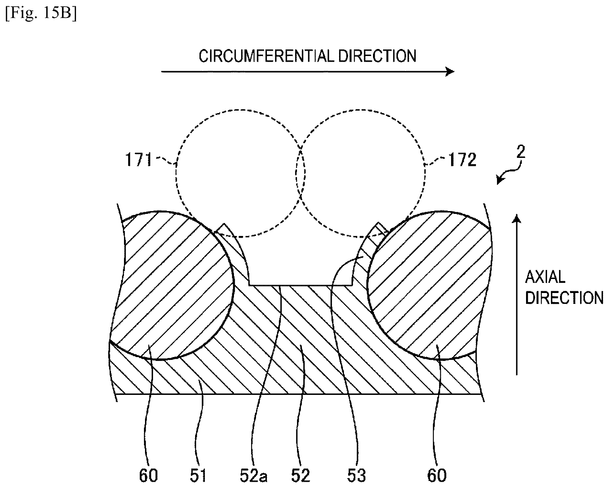

As illustrated in Figs. 14 and 15A, the manufacturing device 100 seals with grease from the positive direction side in the axial direction to the rolling bearing 3 before attachment with the seal members 10 and 20. In this case, as illustrated in Fig. 15A, grease 171 sealed from the nozzle 120 forms the first lump 71 of the lump of grease 70, and grease 172 sealed from the nozzle 130 forms the second lump 72 of the lump of grease 70. According to such a configuration, the lump of grease 70 is sealed in the rolling bearing 3 such that the first lump 71 and the second lump 72 of the lump of grease 70 are caught by the claw parts 53 and 59, respectively, of the holder 50. Before the greases 171 and 172 are injected and the first seal member 10 is attached, the greases 171 and 172 are formed in a substantially spherical shape, for example, as illustrated in Fig. 15B. Fig. 15B is a cross-sectional view along the circumferential direction illustrating an example of a crown-shaped holder after application of grease in the first embodiment.

As described above, the method for manufacturing the rolling bearing 1 in the first embodiment is a method for manufacturing the rolling bearing 1, the rolling bearing 1 including the plurality of rolling elements 60 arranged in the circumferential direction, including the first rolling element 60G and the second rolling element 60A adjacent in the circumferential direction, the crown-shaped holder 50 including the plurality of claw parts including the first claw part 59 projecting in the first direction in the axial direction of the bearing 1 and supporting the first rolling element 60G from one side in the circumferential direction and the second claw part 53 supporting the second rolling element 60A from the other side in the circumferential direction, and the inner ring 40 and the outer ring 30 including the raceway grooves 36 and 46 in contact with the rolling elements 60, the method for manufacturing includes the step of arranging the lump of grease 70 so as not to come into contact with, in the axial direction of the bearing 1, the surface 52a at the first direction side of the crown-shaped holder 50 positioned between the first claw part 59G supporting the first rolling element 60G and the second claw part 53A supporting the second rolling element 60A in the circumferential direction of the bearing 1, and so as to be supported by the first rolling element 60G and the first claw part 59G, and the second rolling element 60A and the second claw part 53A, and the step of attaching the seal member 10 to the outer ring 30 or the inner ring 40 in an aspect of adhering to the lump of grease 70, and bringing a part of the lump of grease 70 into contact with the surface at the first direction side of the crown-shaped holder 50. According to such a configuration, since it is possible to suppress the entrapment of grease into the raceway groove, it is possible to suppress a rise in torque of the rolling bearing. For example, such rolling bearing 1 obtains a torque reduction effect of about 15% as compared with the background art illustrated in Figs. 5 and 9.

The width W1 in the bearing radial direction of the holder 50 may be less than 53% of the distance in the bearing radial direction between the outer peripheral surface 43 of the inner ring 40 and the inner peripheral surface 34 of the outer ring 30. According to such a configuration, a torque reduction effect of about 30% is obtained as compared with the background art illustrated in Figs. 5 and 9.

### Second Embodiment

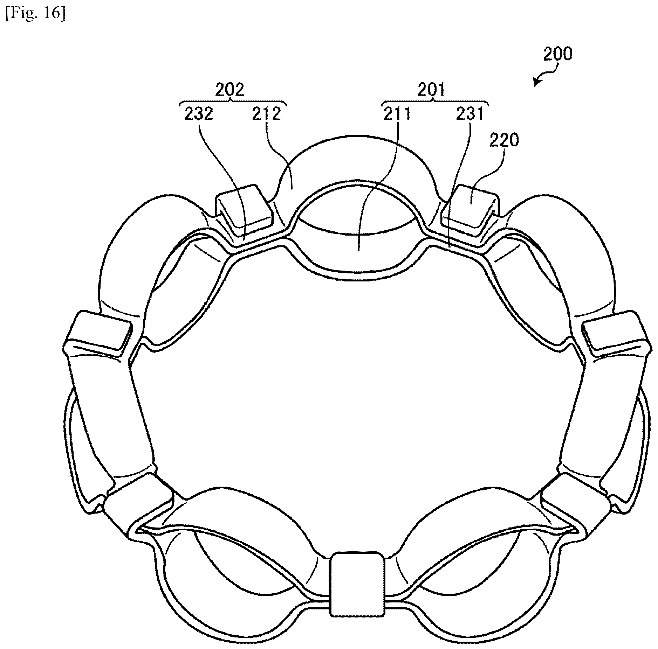

The holder in the first embodiment is a crown-shaped holder as illustrated in Fig. 4, but is not limited to this, and may be a wave-shaped holder as illustrated in Fig. 16. Fig. 16 is a perspective view illustrating an example of a wave-shaped holder in the second embodiment. As illustrated in Fig. 16, a holder 200 is a wave-shaped holder formed by joining, in an axial direction, a pair of plate materials 201 and 202 formed in a wave shape, for example.

As illustrated in Fig. 16, the plate material 201 having the wave shape includes a holding part 211 holding the rolling element 60, and an intermediate plate part 231 formed integrally with the holding part 211 and coupling the holding parts 211 adjacent in a circumferential direction. Similarly, the plate material 202 having the wave shape includes a holding part 212 holding the rolling element 60, and an intermediate plate part 232 formed integrally with the holding part 212 and coupling the holding parts 212 adjacent in a circumferential direction.

The plate materials 201 and 202 having the wave shape are joined in the axial direction by a joint part 220. For example, as illustrated in Fig. 16, the joint part 220 is formed by folding the intermediate plate part 231 of the one plate material 201 having the wave shape onto the intermediate plate part 232 of the other plate material 202 having the wave shape. Note that the joint part 220 may be formed by inserting rivets into through holes formed at the intermediate plate parts 231 and 232 of the plate materials 201 and 202 having the wave shape, for example.

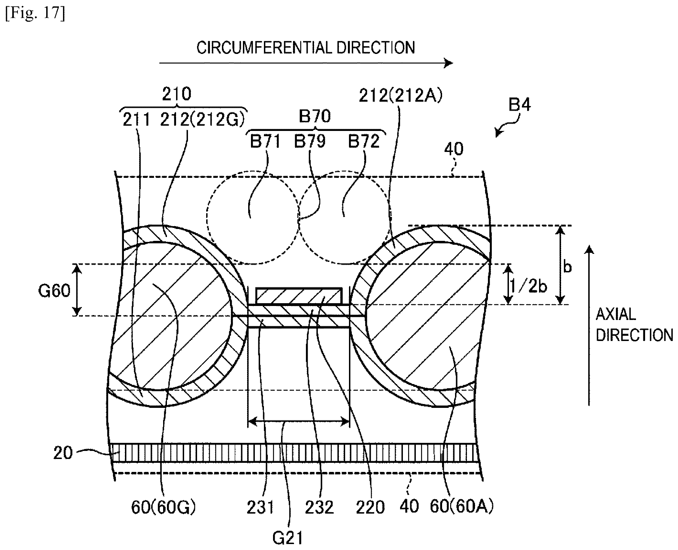

As illustrated in Fig. 17, the holding parts 211 and 212 form a rolling element holding part 210, the rolling element holding part 21 being a part for accommodating the rolling element 60. Fig. 17 is a cross-sectional view along the circumferential direction illustrating an example of arrangement of grease in the second embodiment. As many of the rolling element holding part 210 and the joint part 220 as the number of rolling elements 60, for example, are formed. Note that a rolling bearing B4 illustrated in Fig. 17 illustrates a state with a lump of grease 70 placed and the second seal member 20 attached but before the first seal member 10 is attached.

In the rolling bearing B4 including the holder 200 having the wave shape in the second embodiment, as illustrated in Fig. 17, the lump of grease B70 includes a first lump B71 holding the rolling element 60G and supported by a holding part 212G at one side in the circumferential direction, and a second lump B72 holding the rolling element 60A and supported by a holding part 212A at the other side adjacent in the circumferential direction to the holding part 212G. Also in this case, the first lump B71 and the second lump B72 come into contact with each other at a contact point B79.

Also in such a configuration, a gap G60 is formed between the lump of grease B70 and a center part in the axial direction of the holder 200. That is, the distance between the lump of grease B70 and the raceway grooves 36 and 46 illustrated in Fig. 3 is secured at the sealed stage.

Here, after the first seal member 10 is attached, due to the lump of grease B70 being pushed and deformed, the distance in the axial direction of the gap G60 decreases, and may become "0" depending on the degree of deformation. That is, after the first seal member 10 is attached, the lump of grease B70 may come into contact with the joint part 220 or the intermediate plate part 232. Note that depending on an orientation of the axial direction of the holder 200, the lump of grease B70 is arranged from a negative direction side in the axial direction, that is, from a side having the holding part 211 positioned. In that case, after the second seal member 20 is attached, the lump of grease B70 may come into contact with the intermediate plate part 231.

Note that at a radial direction center of the holder 200 in the second embodiment, a width G21 in a circumferential direction of the intermediate plate parts 231 and 232 is equal to or less than the diameter D8 of the rolling element 60 illustrated in Fig. 2, for example. The width G21 is preferably 80% or less of the diameter D8, more preferably 50% or less of the diameter D8. The thickness in the radial direction of the holder 200 is also less than 53% of a distance D7 illustrated in Fig. 2, for example, similarly to the first embodiment.

As illustrated in Fig. 17, the lump of grease B70 placed on a surface at a positive direction side in the axial direction of the holder 200 having the wave shape may be placed so as to protrude more at the positive direction side in the axial direction than the outer ring 30. The same applies to a lump of grease in the other embodiments and modifications.

### Third Embodiment

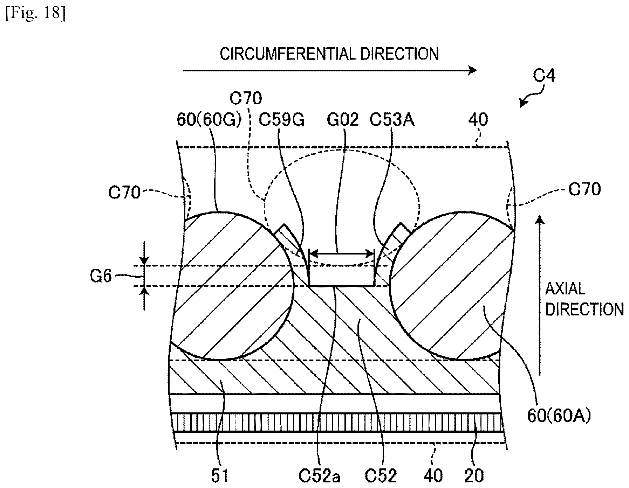

Also in the rolling bearing 1 including the holder 50 having the crown shape in the first embodiment, as illustrated in Figs. 6 and 7A, the distance G01 between the claw parts 53G and 53A adjacent to each other in the circumferential direction is preferably 80% or less of the diameter D8 of the rolling element 60, for example, or 50% of the diameter D8 as illustrated in Fig. 18. Fig. 18 is a cross-sectional view along the circumferential direction illustrating an example of arrangement of grease in a third embodiment. Note that a rolling bearing C4 illustrated in Fig. 18 also illustrates a state with a lump of grease C70 placed and the second seal member 20 attached but before the first seal member 10 is attached. As illustrated in Fig. 18, in the rolling bearing C4 in the third embodiment, a distance G02 between claw parts C59G and C53A adjacent to each other in the circumferential direction is 50% or less of the diameter D8 of the rolling element 60, for example.

As illustrated in Fig. 18, when the distance G02 between the two rolling elements 60 adjacent in the circumferential direction is sufficiently small, one lump of grease C70 not including the two lumps 71 and 72 as illustrated in Fig. 7A may be configured to be supported by two rolling elements 60. Also in this case, it is preferable that the lump of grease is held by two rolling elements and the claw part of the holder, and a gap is formed between the lump of grease and the surface of the column part of the holder in the axial direction at the sealed stage. Note that also in the first embodiment, the grease may be sealed in an aspect of not including the two lumps 71 and 72. Here, also in the case of Fig. 18, the gap G6 is formed between the lump of grease C70 and the surface C52a of the column part C52, but after the first seal member 10 is attached, due to one lump of grease C70 being pushed and deformed, the distance in the axial direction of the gap G6 decreases, and may become "0" depending on the degree of deformation.

Note that also in the third embodiment, the lump of grease C70 supported by the rolling element 60G and the claw part C59G illustrated in Fig. 18 and the rolling element 60A and the claw part C53A does not come into contact with another lump of grease C70 supported by the rolling element 60A and a claw part C59A (not illustrated) in the circumferential direction.

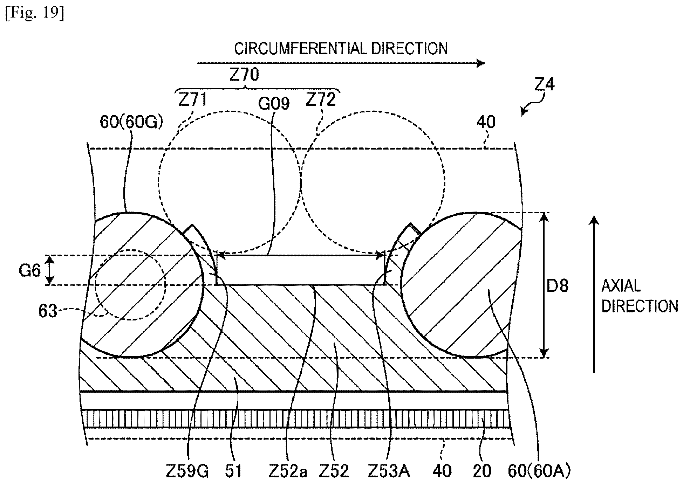

On the other hand, as illustrated in Fig. 19, when a distance G09 between claw parts Z59G and Z53A adjacent to each other in a circumferential direction is larger than the diameter D8 of the rolling element 60, it is difficult to seal one lump of grease C70 as illustrated in Fig. 18 so as to span the two points of the claw parts Z59G and Z53A. Fig. 19 is a cross-sectional view along the circumferential direction illustrating an example of arrangement of grease in a comparative example. Note that a rolling bearing Z4 illustrated in Fig. 19 also illustrates a state with a lump of grease 70 placed and the second seal member 20 attached but before the first seal member 10 is attached.

Also in such a case, similarly to the example illustrated in Fig. 15B, by making a lump of grease Z70 including two lumps Z71 and Z72, it is possible to seal the lump of grease Z70 so as to span the two points of the claw parts Z59G and Z53A. At this time, for example, as illustrated in Fig. 19, it is preferable to increase the lump of grease Z70 to be sealed in the rolling bearing Z4.

Here, also in the case of Fig. 19, the gap G6 is formed between the lump of grease Z70 and the surface Z52a of the column part Z52, but after the first seal member 10 is attached, due to the lump of grease Z70 being pushed and deformed, the distance in the axial direction of the gap G6 decreases, and may become "0" depending on the degree of deformation. In this case, by an increase in the seal amount of the grease, deformed grease easily flows into the raceway groove 36 or 46. Then, as illustrated in Figs. 6 and 7A or 18, the distance G01 or G02 between the claw parts Z59G and Z53A adjacent to each other in the circumferential direction is preferably 80% or less of the diameter D8 of the rolling element 60, for example.

### Modified Examples

While the configuration in each of the embodiments has been described above, the embodiment is not limited to these embodiments. For example, the number of the plurality of rolling elements 60 included in the rolling bearing 1 is an example, and may be 6 or less or 8 or more.

While a configuration with the lump of grease 70 arranged so as to be supported by both the claw part 53 and the rolling element 60 has been described, the lump of grease 70 may be configured to be arranged so as to be supported only by the claw part 53 or supported only by the rolling element 60.

While a configuration with the first seal member 10 and the second seal member 20 attached at the outer ring 30 has been described, the embodiment is not limited to this, and the first seal member 10 and the second seal member 20 may be configured to be attached at the inner ring 40. A configuration with a gap G7 illustrated in Fig. 3 being not formed, that is, the seal member 10 or 20 covering the outer ring 30 and the inner ring 40 without a gap may be adopted. Note that the seal members 10 and 20 may be fixed to the outer ring or the inner ring not via the snap ring 13 or 23. A configuration with the second seal member 20 not included and only the first seal member 10 attached may be adopted.

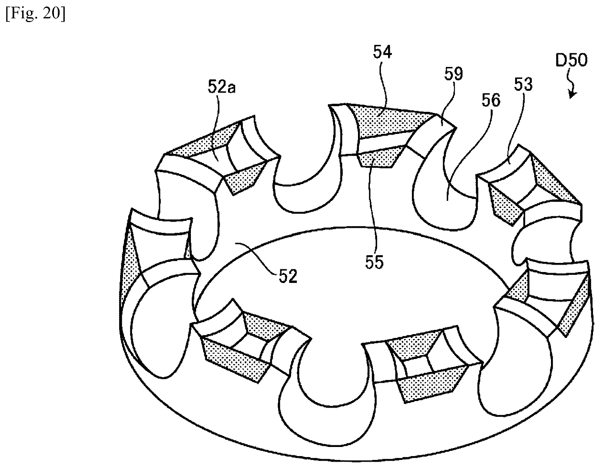

The front surface 52a of the column part 52 formed at the holder 50 having the crown shape illustrated in Fig. 4 may be configured to include a wall as illustrated in Fig. 20. Fig. 20 is a perspective view illustrating an example of a crown-shaped holder in a second modification. A holder D50 having a crown shape illustrated in Fig. 20 includes a wall 54 at an outer side in the radial direction of the surface 52a and a wall 55 at an inner side in the radial direction of the surface 52a. According to such a configuration, since the motion of the grease placed on the rolling element 60 or the claw part 53 is suppressed by the walls 54 and 55, the grease is further suppressed from approaching the raceway grooves 36 and 46.

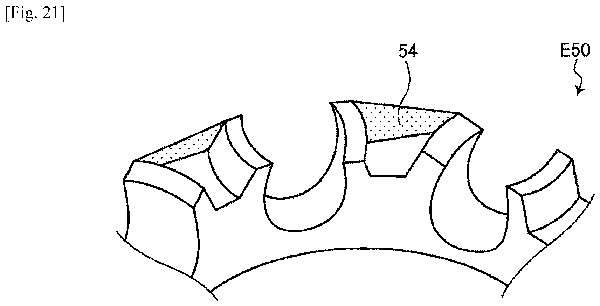

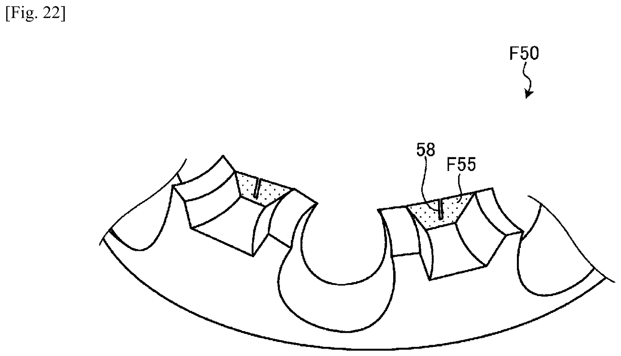

As illustrated in Figs. 21 and 22, the wall may be configured to be formed at only any one of an outer side and an inner side in the radial direction of the surface 52a of the column part 52 of the crown-shaped holder. Fig. 21 is a partial perspective view illustrating an example of a crown-shaped holder in a third modification. Fig. 22 is a partial perspective view illustrating an example of a crown-shaped holder in a fourth modification. As illustrated in Fig. 21, a holder E50 having a crown shape in the third modification includes the wall 54 at the outer side in the radial direction of the surface 52a, but no wall is formed at the inner side in the radial direction of the surface 52a. As illustrated in Fig. 22, a holder F50 having a crown shape in the fourth modification includes a wall F55 at the inner side in the radial direction of the surface 52a, but no wall is formed at the outer side in the radial direction of the surface 52a.

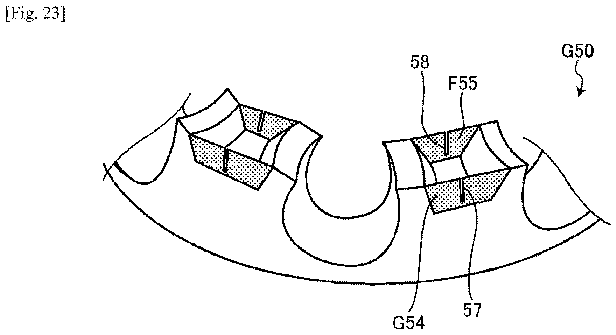

Furthermore, as illustrated in Figs. 22 and 23, a slit may be formed at the wall of the crown-shaped holder. Fig. 23 is a partial perspective view illustrating an example of a crown-shaped holder in a fifth modification. As illustrated in Figs. 22 and 23, a slit 58 is formed at the wall F55 formed at the inner side in the radial direction of the surface 52a. As illustrated in Fig. 23, a slit 57 is formed at a wall G54 formed at the outer side in the radial direction of the surface 52a of a holder G50 having a crown shape in the fifth modification.

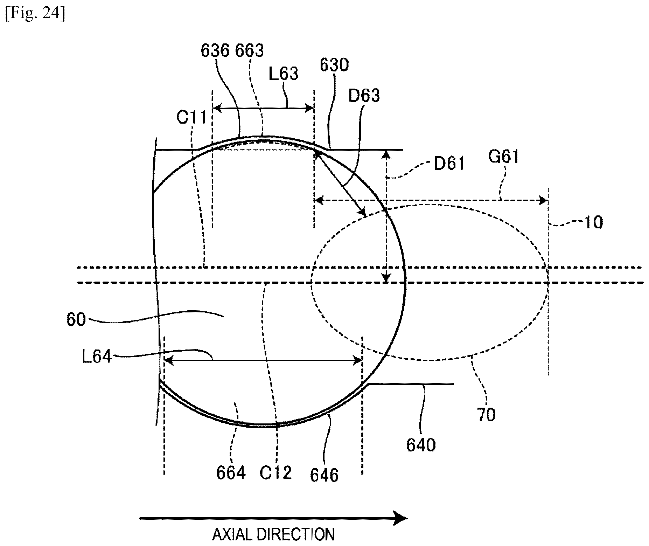

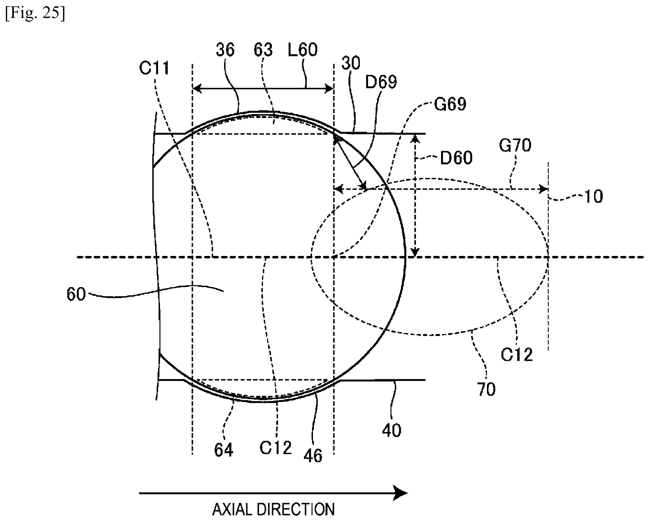

Note that in the rolling bearing 3, in order to reduce rolling torque of the rolling element 60, as illustrated in Fig. 24, the pitch circle diameter PCD of the rolling element 60 is preferably smaller than an intermediate value of the outer diameter between the inner diameter of the outer ring 30 and the inner ring 40 (the pitch circle of the rolling element 60 is present more at an inner side in the radial direction than the intermediate position between the inner diameter of the outer ring 30 and the outer diameter of the inner ring 40). Fig. 24 is a cross-sectional view illustrating an example of a positional relationship between grease and a raceway groove in a sixth modification. Fig. 25 is a cross-sectional view illustrating an example of a positional relationship between grease and a raceway groove in a comparative example. The comparative example illustrated in Fig. 25 illustrates a positional relationship between the rolling element 60 and the outer ring 30 and the inner ring 40 in the first embodiment, for example.

In the comparative example illustrated in Fig. 25, a line C11 passing through the intermediate point between the outer ring 30 and the inner ring 40 in the radial direction substantially matches a line C12 passing through the center in the radial direction of the rolling element 60. In contrast to this, in the sixth modification illustrated in Fig. 24, the line C12 is positioned more at an inner side in the radial direction than the line C11. That is, the rolling element 60 in the sixth modification is arranged at a position offset to an inner side in the radial direction. In this case, when the pitch circle (passing through the center) of the lump of grease 70 and the pitch circle (passing through the center) of the rolling element 60 substantially match, the pitch circle passing through the center of the lump of grease 70 is also present more at an inner side in the radial direction than an intermediate position between the inner peripheral surface of the outer ring 30, the inner ring 40, and the outer peripheral surface. In this case, a distance D61 in the radial direction between the line C12 and an outer ring 630 is also larger than a distance D60 in the comparative example.

In the comparative example illustrated in Fig. 25, a size L60 in an axial direction of the part 63 of the rolling element 60 overlapping the raceway groove 36 of the outer ring 30 is substantially identical to a size in an axial direction of the part 64 overlapping the raceway groove 46 of the inner ring 40 in the rolling element 60. In contrast to this, in the sixth modification illustrated in Fig. 24, a size L63 of a part 663 overlapping a raceway groove 636 of the outer ring 630 in the rolling element 60 is smaller than a size L64 of a part 664 overlapping a raceway groove 646 of an inner ring 640 in the rolling element 60. In this case, a distance G61 in the axial direction between the raceway groove 636 and the first seal member 10 is also larger than a distance G70 in the comparative example. In the sixth modification, the distance D61 in the radial direction between the center of the lump of grease 70 and the outer ring 630 is also larger than the distance D60 in the comparative example. In this case, a distance D63 between the lump of grease 70 and the part 663 overlapping the raceway groove 636 of the outer ring 630 in the rolling element 60 is also larger than a distance D69 in the comparative example. By this, in the sixth modification, the lump of grease 70 is less likely to be entrapped by the raceway groove 636 of the outer ring 630.

Note that in the sixth modification, the distance between the part 664 overlapping the raceway groove 646 of the inner ring 640 and the lump of grease 70 in the rolling element 60 is smaller than the distance in the comparative example. However, the lump of grease 70 is known to easily move toward an outer side in the radial direction in accordance with the centrifugal force generated by rotation of the rolling bearing. In this case, the effect of reducing torque by reducing the grease entrapped in the raceway groove 636 of the outer ring 630 is larger than increasing torque by increasing the grease entrapped in the raceway groove 646 of the inner ring 640.

In the embodiments and the modifications, the position of the raceway groove of the outer ring and the position of the raceway groove of the inner ring in the axial direction are illustrated as being substantially identical, but the embodiment is not limited to this, and any one or both may be configured to be offset in the axial direction.

Although the present invention has been described above based on the embodiments and the modifications, the present invention is not limited to the embodiments and the modifications, and it goes without saying that various changes can be made without departing from the gist of the present invention. Various variations without departing from such gist are also included in the technical scope of the present invention, and this is apparent to those skilled in the art from the description of the claims.

### Reference Signs List

1, 2, 3, 9, A1, A9, B4, C4, Z4 Rolling bearing, 10, A10 First seal member, 13 Snap ring, 20 Second seal member, 23 Snap ring, 30, 630 Outer ring, 34 Inner peripheral surface, 36, 636 Raceway groove, 40, 640 Inner ring, 43 Outer peripheral surface, 46, 646 Raceway groove, 50, 200, D50, E50, F50, G50 Holder, 51 Annular part, 52 Column part, 53, 59, C53A, C59A, C59G, Z53A, Z59G Claw part, 54, G54, 55, F55 Wall, 56 Holding part, 57, 58 Slit, 60 Rolling element, 70, B70, C70, Z70 Lump of grease, 80, 81, 89, 91, 92 Grease, 83, 84, 87, 88 Grease bridge, 100 Manufacturing device, 110 Placement part, 120, 130 Nozzle, 210 Rolling element holding part, 211, 212 Holding part, 220 Joint part, 231, 232 Intermediate plate part, S Bearing space

## Claims

1. A method for manufacturing a rolling bearing, the rolling bearing including
a plurality of rolling elements arranged in a circumferential direction, the rolling elements including a first rolling element and a second rolling element adjacent in the circumferential direction,
a crown-shaped holder including a plurality of claw parts including a first claw part projecting in a first direction in an axial direction of a bearing and supporting the first rolling element from one side in the circumferential direction and a second claw part supporting the second rolling element from an other side in the circumferential direction, and
an inner ring and an outer ring including a raceway groove in contact with the rolling elements,
the method for manufacturing comprising:
arranging a lump of grease so as not to come into contact with, in the axial direction of the bearing, a surface at the first direction side of the crown-shaped holder positioned between the first claw part supporting the first rolling element and the second claw part supporting the second rolling element in the circumferential direction of the bearing, and so as to be supported by the first rolling element and the first claw part, and the second rolling element and the second claw part; and
attaching a seal member to the outer ring or the inner ring in an aspect of adhering to the lump of grease, and bringing a part of the lump of grease into contact with the surface at the first direction side of the crown-shaped holder.

2. A method for manufacturing a rolling bearing, the rolling bearing including a plurality of rolling elements arranged in a circumferential direction, a holder holding the rolling elements, and an inner ring and an outer ring including a raceway groove in contact with the rolling elements, the method for manufacturing comprising:
arranging a lump of grease so as to be supported by a part of the holder and a first rolling element and a second rolling element adjacent in the circumferential direction; and
attaching a seal member to the outer ring or the inner ring in an aspect of adhering to the lump of grease, wherein
the holder is a crown-shaped holder including a plurality of claw parts projecting in a first direction in an axial direction of a bearing and supporting the rolling elements in the circumferential direction,
the lump of grease includes a first lump supported by the first rolling element and a first claw part supporting the first rolling element from one side in the circumferential direction, and a second lump coming into contact with the first lump in the circumferential direction and supported by the second rolling element and a second claw part supporting the second rolling element from an other side in the circumferential direction,
the lump of grease is arranged apart from another lump of grease supported by the first rolling element and another claw part supporting the first rolling element from an other side in the circumferential direction, and
in arranging the lump of grease, the lump of grease is arranged so as not to come into contact with, in the axial direction of the bearing, a surface at the first direction side of the holder positioned between the first claw part and the second claw part in the circumferential direction of the bearing.

3. The method for manufacturing a rolling bearing according to claim 2, wherein the first lump and the second lump of the lump of grease are discharged from different nozzles from each other.

4. The method for manufacturing a rolling bearing according to any one of claims 1 to 3, wherein in arranging the lump of grease, the lump of grease includes a plurality of lumps in contact with each other at a surface upper part at the first direction side of the crown-shaped holder in the axial direction of the bearing.

5. The method for manufacturing a rolling bearing according to any one of claims 1 to 4, wherein in arranging the lump of grease, the lump of grease is arranged apart from another lump of grease supported by the second claw part supporting the first rolling element from an other side in the circumferential direction and another lump of grease supported by the first claw part supporting the second rolling element from one side in the circumferential direction.

6. The method for manufacturing a rolling bearing according to any one of claims 1 to 5, wherein a distance between a claw part of the crown-shaped holder and the seal member in the axial direction is less than 50% of a diameter of the rolling elements.

7. The method for manufacturing a rolling bearing according to any one of claims 1 to 6, wherein a distance between the claw parts adjacent to each other in the circumferential direction in the crown-shaped holder is equal to or less than a diameter of the rolling elements.

8. The method for manufacturing a rolling bearing according to any one of claims 1 to 7, wherein a size of a part with the rolling elements being exposed from a claw part of the crown-shaped holder in the axial direction is less than 20% of a diameter of rolling elements.

9. The method for manufacturing a rolling bearing according to any one of claims 1 to 8, wherein a thickness in a bearing radial direction of the crown-shaped holder is less than 53% of a distance in the bearing radial direction between an outer peripheral surface of the inner ring and an inner peripheral surface of the outer ring.

10. The method for manufacturing a rolling bearing according to any one of claims 1 to 9, wherein a proportion of a diameter of the rolling elements to a width of the outer ring in the axial direction is 42% or more.

11. The method for manufacturing a rolling bearing according to claim 10, wherein a diameter of an outer ring of the rolling bearings is 70 mm or less.

12. The method for manufacturing a rolling bearing according to any one of claims 1 to 11, the method for manufacturing further comprising rotating a rolling bearing attached with the seal member at a rotation speed of a use rotation speed or less.

13. The method for manufacturing a rolling bearing according to claim 12, wherein after the rotating, a proportion of an area with the grease visually recognizable to an entire gap between the holder and the outer ring in the axial direction is 70% or less.

14. The method for manufacturing a rolling bearing according to claim 12 or 13, wherein when the seal member is removed after the rotating, a proportion of a volume of the grease adhering to the holder to a volume of the grease sealed is 20% or more.

15. The method for manufacturing a rolling bearing according to any one of claims 1 to 14, wherein a pitch circle diameter of the lump of grease substantially matches a pitch circle diameter of the rolling elements.

16. The method for manufacturing a rolling bearing according to any one of claims 1 to 15, wherein a pitch circle diameter of the rolling elements is smaller than an intermediate value between an inner diameter of the outer ring and an outer diameter of the inner ring.

17. The method for manufacturing a rolling bearing according to any one of claims 1 to 16, wherein in arranging the lump of grease, the lump of grease is arranged so as to be apart from the outer ring and the inner ring in the radial direction of the bearing in a bearing space surrounded by the inner ring and the outer ring and the seal member so as not to adhere to the raceway groove.

18. The method for manufacturing a rolling bearing according to any one of claims 1 and 3 to 17, wherein the grease comes into contact with both the seal member and a part other than the claw part of the holder.

19. A method for manufacturing a rolling bearing, the rolling bearing including
a plurality of rolling elements arranged in a circumferential direction,
a holder holding the rolling elements, and
an inner ring and an outer ring including a raceway groove in contact with the rolling elements,
the holder being a wave-shaped holder formed by joining, in an axial direction, a pair of plate materials including a holding part holding the rolling elements and an intermediate plate part formed integrally with the holding part and coupling the holding part adjacent in the circumferential direction, the method for manufacturing comprising:
arranging a lump of grease so as to be supported by a part of the holder; and
attaching a seal member to the outer ring or the inner ring in an aspect of adhering to the lump of grease, wherein
the lump of grease is arranged so as not to come into contact with the intermediate plate part of the wave-shaped holder in the axial direction of a bearing.

20. The method for manufacturing a rolling bearing according to claim 19, wherein a distance in the axial direction from an intermediate point of a length in an axial direction of the holding part to the seal member is less than 50% of a diameter of the rolling elements.

21. The method for manufacturing a rolling bearing according to claim 20, wherein at a radial direction center of the holder, a width in the circumferential direction of the intermediate plate part is a diameter of the rolling elements or less.

22. A rolling bearing comprising: a plurality of rolling elements arranged in a circumferential direction; a holder holding the rolling elements, an inner ring and an outer ring including a raceway groove in contact with the rolling elements, and a seal member opposing the holder in an axial direction, wherein
grease is sealed in a bearing space surrounded by the inner ring and the outer ring and the seal member,
the holder is a crown-shaped holder including an annular part, a column part, and a claw part formed at the column part, and
a distance between the claw part of the holder and the seal member in the axial direction is less than 50% of a diameter of the rolling elements.

23. A rolling bearing comprising: a plurality of rolling elements arranged in a circumferential direction; a holder holding the rolling elements, an inner ring and an outer ring including a raceway groove in contact with the rolling elements, and a seal member opposing the holder in an axial direction, wherein
grease is sealed in a bearing space surrounded by the inner ring and outer ring and the seal member,
the holder is a wave-shaped holder formed by joining, in the axial direction, a pair of plate materials including a holding part holding the rolling elements and an intermediate plate part formed integrally with the holding part and coupling the holding part adjacent in the circumferential direction, and
a distance in the axial direction from an intermediate point of a length in the axial direction of the holding part to the seal member is less than 50% of a diameter of the rolling elements.

24. The rolling bearing according to claim 22 or 23, wherein loss tangent of the grease when measured under conditions of a temperature of 25°C, a frequency of 1 Hz, and a strain amount of 0.07 (fixed)% is a value of 0.1 or more and 0.2 or less.

25. The rolling bearing according to any one of claims 22 to 24, wherein a proportion of a diameter of the rolling elements to a width of the outer ring in the axial direction is 42% or more.

26. A rolling bearing manufacturing device,
a rolling bearing including: a plurality of rolling elements arranged in a circumferential direction; a holder holding the rolling elements; and a raceway groove formed at each of an inner ring and an outer ring and in contact with the rolling elements,
a lump of grease including a first lump supported by a first rolling element and a part of the holder, and a second lump in contact with the first lump in the circumferential direction and supported by a second rolling element adjacent in the circumferential direction to the first rolling element and another part of the holder, being placed at the rolling bearing,
the holder being a crown-shaped holder including a plurality of claw parts projecting in a first direction in an axial direction of a bearing and supporting the rolling elements in the circumferential direction,
a first lump of the lump of grease being supported by the first rolling element and a first claw part supporting the first rolling element from one side in the circumferential direction, and a second lump of the lump of grease being supported by the second rolling element and a second claw part supporting the second rolling element from an other side in the circumferential direction,
the lump of grease being arranged apart from another lump of grease supported by the first rolling element and another claw part supporting the first rolling element from an other side in the circumferential direction, and
in placing the lump of grease, the lump of grease being placed so as not to come into contact with, in the axial direction of the bearing, a surface at the first direction side of the holder positioned between the first claw part and the second claw part in the circumferential direction of the bearing,
the rolling bearing manufacturing device comprising:
at least two nozzles, wherein
the first lump and the second lump are discharged from different nozzles from each other.

27. The rolling bearing manufacturing device according to claim 26, wherein the first lump and the second lump are simultaneously discharged from different nozzles from each other.
